# EUROPÄISCHE PATENTSCHRIFT

(11) **EP 2 681 461 B1**
(45) Veröffentlichungstag und Bekanntmachung des Hinweises auf die Patenterteilung: **15.04.2015**
(21) Anmeldenummer: 12709303.7
(22) Anmeldetag: 29.02.2012
(51) Int. Cl.: F16C 3/02

(54) **WELLENANORDNUNG MIT ÜBERGANGSMODUL ZUR EINBINDUNG EINER ANTRIEBSWELLE**
SHAFT ASSEMBLY WITH TRANSITION MODULUS TO INTEGRATE A DRIVE SHAFT
AGENCEMENT D'ARBRE AVEC MODULE DE TRANSITION POUR INTÉGRER UN ARBRE D' ENTRAÎNEMENT

(30) Priorität: 01.03.2011 DE 102011000992
(43) Veröffentlichungstag der Anmeldung: 08.01.2014
(73) Patentinhaber: Technische Universität Darmstadt, 64289 Darmstadt (DE)
(72) Erfinder: SCHÜRMANN, Helmut, 67133 Maxdorf (DE); DICKHUT, Tobias, 65428 Rüsselsheim (DE)
(74) Vertreter: Katscher Habermann Patentanwälte
(86) Internationale Anmeldenummer: PCT/EP2012/053440
(87) Internationale Veröffentlichungsnummer: WO 2012/117020

(56) Entgegenhaltungen:
- DE-A1- 10 136 707
- DE-A1-102009 009 682
- JP-A- 1 108 031

## Beschreibung

Die Erfindung betrifft eine Wellenanordnung mit einer Hohlwelle aus einem Faserverbundwerkstoff.

Derartige Hohlwellen mit Verstärkungselementen in den Verbindungsbereichen an ihren Enden sind aus DE 101 36 707 A1 und JP 1-108031 A bekannt. Antriebswellen dienen beispielsweise in Kraftfahrzeugen dazu, ein Moment zwischen dem Getriebe und einem angetriebenen Rad beziehungsweise einem Differenzial zu übertragen. Üblicherweise werden solche Antriebswellen aus Metall hergestellt, da für die zu übertragenden Drehmomente von häufig mehreren 1000Nm eine ausreichende Festigkeit der Antriebswellen erforderlich ist und der Einsatz und die Herstellung von metallischen Antriebswellen in der industriellen Praxis seit vielen Jahren erprobt ist.

Zur Reduzierung des Gewichts der Antriebswelle ist vorgeschlagen worden, Antriebswellen aus einem Faserverbundwerkstoff, insbesondere aus einem Faserkunststoffverbund herzustellen. Eine aus einem Faserverbundwerkstoff hergestellte Antriebswelle kann zwar das notwendige Drehmoment übertragen, verformt sich aber ebenso wie beispielsweise eine Antriebswelle aus Metall ab einer kritischen Drehzahl insbesondere in einem mittleren Bereich der Welle und rotiert exzentrisch um die Rotationsachse. Eine kostengünstige Lösung dieses Problems stellt die Vergrößerung des Durchmessers der üblicherweise als Hohlwelle ausgestalteten Antriebswelle dar.

Allerdings ist der in dem Verbindungsbereich an den Enden der Antriebswelle vorhandene Bauraum oftmals begrenzt und eine Anbindung der aus einem Faserverbundwerkstoff bestehenden Antriebswelle an weitere, in vielen Fällen hinsichtlich der Abmessungen normierte Komponenten eines Antriebsstrangs erforderlich, so dass eine entsprechende Vergrößerung der gesamten Antriebswelle in diesen Endbereichen häufig nicht möglich ist. Zur Lösung dieses Problems ist vorgeschlagen worden, den Durchmesser der Antriebswelle in den Endbereichen entsprechend der Bauraumvorgaben zu wählen und zur Mitte der Antriebswelle hin zu vergrößern.

Zur Herstellung auf diese Weise ausgeformter Antriebswellen können beispielsweise herkömmliche Wickeldorne verwendet werden, auf die ein Schaumstoffkern entsprechend der gewünschten Kontur der Antriebswelle aufgebracht und mit Hilfe einer geeigneten Wickelvorrichtung mit dem Faserverbundwerkstoff umwickelt wird. Die bekannten Herstellungsverfahren sind äußert aufwändig und kostenintensiv. Zudem wird durch die Verwendung eines Schaumstoffkerns viel zusätzliche Masse in die Antriebswelle eingebracht, so dass die maximale Länge der Antriebswelle bezüglich einer maximal vorgesehen Drehzahl der Welle begrenzt ist.

Aufgabe der Erfindung ist es daher, Antriebswellen aus einem Faserverbundwerkstoff mit mindestens einer Durchmesserveränderung der Antriebswelle so auszugestalten, dass eine einfache und kostengünstige Herstellung der Antriebswellen ohne Einschränkung der Wellenlänge ermöglicht wird.

Diese Aufgabe wird erfindungsgemäß dadurch gelöst, dass die Hohlwelle in einem Hohlwellenverbindungsbereich mit einem Übergangsmodul zur Einbindung der Hohlwelle in einen Antriebsstrang drehfest und biegesteif verbunden ist, wobei das Übergangsmodul aus einem Faserverbundwerkstoff besteht und ein in einem ersten Verbindungsbereich angeordnetes erstes Verstärkungselement und ein in einem zweiten Verbindungsbereich angeordnetes zweites Verstärkungselement aufweist, wobei die Verstärkungselemente dazu geeignet sind, eine drehfeste Verbindung des Übergangsmoduls mit der Hohlwelle und einem weiteren Element des Antriebsstrangs zu ermöglichen. Die Antriebswelle wird also mindestens an einem ihrer Enden drehfest und biegesteif mit dem Übergangsmodul verbunden. Durch die Einfügung eines solchen Übergangsmoduls wird die benötigte Länge der Antriebswelle im Vergleich zu der benötigten Länge einer Antriebswelle ohne Übergangsmodul verkürzt. Auf diese Weise wird die kritische Drehzahl der Antriebswelle erhöht, bei der eine um die Rotationsachse exzentrische Rotation auftritt.

Zudem ist es möglich, das Übergangsmodul in einem Bereich, in dem nur begrenzter Bauraum zur Verfügung steht, mit einem entsprechend kleinen Durchmesser zu versehen und diesen Durchmesser zu dem mit der Antriebswelle verbundenen Verbindungsbereich hin zu vergrößern, so dass die eigentliche Antriebswelle einen bezüglich der kritischen Drehzahl günstigen Durchmesser aufweist. Auf diese Weise kann die Antriebswelle einen konstanten Durchmesser aufweisen, wodurch die Produktionskosten der Antriebswellen erheblich gesenkt werden.

Die Antriebswellen können auf herkömmlichen Wickeldornen ohne zusätzliche Schaumstoffkerne in beliebiger Länge hergestellt werden. Zur Herstellung der Übergangsmodule können ebenso herkömmliche Wickeldorne verwendet werden, auf die beispielsweise metallische Formkörper aufgeschoben werden, die die Innenkontur des Übergangsmoduls aufweisen. Diese metallischen Körper werden mit Hilfe einer entsprechenden Wickelvorrichtung mit dem Faserverbundwerkstoff umwickelt. Weist das Übergangsmodul einen kontinuierlich steigenden beziehungsweise gleichbleibenden Durchmesser auf, so ist es ohne weiteres möglich, den metallischen Formkörper nach dem Wickelvorgang zu entfernen.

Zur Anpassung der Durchmesser des Übergangsmoduls an die zu berücksichtigenden Bauraumrestriktionen und den benötigten Durchmesser der Antriebswelle ist vorteilhafterweise vorgesehen, dass ein Durchmesser des ersten Verbindungsbereichs kleiner als ein Durchmesser des zweiten Verbindungsbereichs ist. Der Durchmesser des ersten Verbindungsbereichs kann beispielsweise an vorhandene Bauraumrestriktionen angepasst sein, so dass das Übergangsmodul in dem ersten Verbindungsbereich mit einem entsprechenden Verbindungselement, das beispielsweise mit einem Getriebe verbindbar ist, verbunden werden kann. Der Durchmesser in dem zweiten Verbindungsbereich kann dann an den Durchmesser der Antriebswelle angepasst sein.

Es ist aber auch möglich und in einigen Anwendungsfällen sinnvoll, dass der Durchmesser des ersten Verbindungsbereichs größer als der Durchmesser des zweiten Verbindungsbereichs ist.

Zur einfacheren Anpassung des Übergangsmoduls an den vorhandenen Bauraum sowie zur Vereinfachung der Herstellung des Ubergangsmoduls kann weiter vorgesehen sein, dass der erste Verbindungsbereich und der zweite Verbindungsbereich durch einen Übergangsbereich verbunden sind, wobei sich der Übergangsbereich ausgehend von dem ersten Verbindungsbereich zu dem zweiten Verbindungsbereich erweitert.

Um die Herstellung zu vereinfachen und den Herstellungsaufwand zu senken kann vorgesehen sein, dass eine Durchmesseränderung des Übergangsbereichs eine näherungsweise hyperbolische Krümmung aufweist. Ein solcher hyperbolisch gekrümmter Übergangsbereich lässt sich besonders einfach mit Hilfe herkömmlicher Wickelvorrichtungen aus Faserverbundwerkstoff herstellen.

Zweckmäßigerweise ist vorgesehen, dass das zweite Verstärkungselement an einer Innenseite des zweiten Verbindungsbereichs angeordnet ist. Es ist auch möglich, dass das erste Verstärkungselement an einer Innenseite des ersten Verbindungsbereichs angeordnet ist. Das erste und das zweite Verstärkungselement können beispielsweise in Ringform aus Metall, einem Faserkunststoffverbund oder einem entsprechenden Material hergestellt werden und durch Schrumpfen, Wickeln oder Pressen in die entsprechenden Verbindungsbereiche des Übergangsmoduls eingebracht werden.

Es ist aber auch möglich und in einigen Anwendungsfällen zweckmäßig, dass das zweite Verstärkungselement an einer Außenseite des zweiten Verbindungsbereichs angeordnet ist. Ebenso kann das erste Verstärkungselement an der entsprechenden Außenseite des ersten Verbindungsbereichs angeordnet sein.

Um die Verbindung des Übergangsmoduls mit der Antriebswelle beziehungsweise mit dem weiteren Element des Antriebsstrangs in dem ersten Verbindungsbereich und/oder dem zweiten Verbindungsbereich in der Fertigung weiter zu vereinfachen ist vorgesehen, dass das erste Verstärkungselement und/oder das zweite Verstärkungselement mindestens teilweise von dem Faserverbundwerkstoff umschlossen beziehungsweise angewickelt sind. Die Verstärkungselemente können beispielsweise in einem ersten Wickelvorgang auf eine bereits gewickelte Faserverbundwerkstoffschicht des Übergangsmoduls aufgewickelt werden und anschließend in einem zweiten Wickelvorgang weitere Lagen des Übergangsmoduls gewickelt werden.

Die Verbindungsbereiche können noch weiter dadurch verstärkt werden, dass das erste Verstärkungselement und/oder das zweite Verstärkungselement mehrteilig aufgebaut sind. Auf diese Weise kann ein erster Teil eines Verstärkungselements innerhalb einer Faserverbundwerkstoffschicht und ein zweiter Teil an einer Innenseite des entsprechenden Verbindungsbereichs angeordnet werden.

Zur Verbindung der Verstärkungselemente mit dem Übergangsmodul ist vorteilhafterweise vorgesehen, dass das erste Verstärkungselement an dem ersten Verbindungbereich und/oder das zweite Verstärkungselement an dem zweiten Verbindungsbereich aufgepresst oder angewickelt ist. Es ist aber auch möglich, die Verstärkungselemente beispielsweise durch Schrumpfen mit den Verbindungsbereichen zu verbinden.

Zur einfacheren Herstellung der Übergangsmodule ist vorgesehen, dass das erste Verstärkungselement und/oder das zweite Verstärkungselement ringförmig ausgestaltet sind. Ringförmige Verstärkungselemente können insbesondere aus Metall sehr einfach und kostengünstig hergestellt werden.

Um eine ausreichende Steifigkeit zur Übertragung der anliegenden Drehmomente zu gewährleisten, ist vorteilhafterweise vorgesehen, dass die Hohlwelle in dem Hohlwellenverbindungsbereich ein Verbindungsteil aufweist. Bei diesem Verbindungsteil kann es sich beispielsweise um einen Stützring aus Metall oder einem anderen geeigneten Werkstoff handeln, der in dem Hohlwellenverbindungsbereich auf die Hohlwelle aufgesteckt, an der Hohlwelle mit Stiften befestigt oder angewickelt wird. Das Verbindungsteil kann aber auch durch Pressen oder Schrumpfen mit der Hohlwelle verbunden werden.

Vorteilhafterweise ist vorgesehen, dass das Übergangsmodul und die Hohlwelle Fasern aufweisen, wobei die Fasern des Übergangsmoduls anders ausgerichtet sind, als die Fasern der Hohlwelle. Auf diese Weise kann die Ausrichtung der Fasern beziehungsweise der Wickelwinkel der Fasern für jeden Bereich entsprechend der jeweiligen Anforderungen angepasst werden. Dadurch wird auch eine kostengünstige Herstellung der Übergangsmodule und der Hohlwellen ermöglicht.

Es ist aber auch möglich und in einigen Anwendungsfällen zweckmäßig, dass das Übergangsmodul und die Hohlwelle Fasern aufweisen, wobei die Fasern des Übergangsmoduls und die Fasern der Hohlwelle gleich ausgerichtet sind.

Die Übergangsmodule und die Hohlwellen können einfach dadurch kostengünstig an die jeweiligen Anforderungen angepasst werden, dass das Übergangsmodul und die Hohlwelle eine unterschiedliche Laminatdicke aufweisen. Auf diese Weise kann beispielsweise die Laminatdicke der Hohlwelle im Vergleich zu der Laminatdicke des Übergangsmoduls kleiner gewählt werden, so dass das Gewicht der Hohlwelle und die Herstellungskosten der Hohlwelle reduziert werden können. Es ist aber auch möglich, dass das Übergangsmodul und die Hohlwelle die gleiche Laminatdicke aufweisen.

Zur weiteren Senkung der Herstellungskosten ist vorgesehen, dass das Übergangsmodul aus einem anderen Faserverbundwerkstoff besteht als die Hohlwelle. Beispielsweise kann der Faserverbundwerkstoff der Hohlwelle eine andere Faserart beziehungsweise einen anderen Fasertyp aufweisen als der Faserverbundwerkstoff des Übergangsmoduls. Auf diese Weise kann entsprechend der jeweiligen Anforderungen der jeweilig kostengünstigste Faserverbundwerkstoff zur Herstellung der Übergangsmodule und der Hohlwellen gewählt werden. Es ist aber auch möglich, für die Übergangsmodule und die Hohlwellen den gleichen Faserverbundwerkstoff einzusetzen.

Vorteilhafterweise ist vorgesehen, dass die Hohlwelle oder das Übergangsmodul kraftschlüssig miteinander verbindbar sind. Es ist aber auch möglich, das Übergangsmodul und die Hohlwelle formschlüssig miteinander zu verbinden.

Es ist denkbar und in einigen Anwendungsfällen zweckmäßig, dass die Hohlwelle längs eines Hohlwellenabschnitts einen geringfügig variierenden, beispielsweise konischen Verlauf aufweist. Auf diese Weise kann auch die Hohlwelle an vorhandene Bauraumrestriktionen einfach angepasst werden.

Vorteilhafterweise ist vorgesehen, dass zwei Übergangsmodule, wie vorangehend beschrieben, drehfest und biegesteif mit der Hohlwelle verbunden sind, wobei jeweils ein Übergangsmodul mit jeweils einem der beiden Enden der Hohlwelle verbunden ist.

Nachfolgend werden Ausführungsbeispiele des Erfindungsgedankens näher erläutert, die in der Zeichnung dargestellt sind.

Es zeigt:
Fig. 1 eine schematische Darstellung einer Wellenanordnung mit einer Hohlwelle und zwei Übergangsmodulen,
Fig. 2 eine schematische Darstellung eines Übergangsmoduls mit einer in einem Verbindungsbereich bearbeiteten Fügefläche,
Fig. 3 eine schematische Darstellung eines Übergangsmoduls,
Fig. 4 eine schematische Darstellung eines Verbindungsbereichs mit einem mehrteiligen, vollständig von einem Faserverbundwerkstoff umschlossenen Verstärkungselement,
Fig. 5 eine schematische Darstellung eines Verbindungsbereichs mit einem mehrteiligen, teilweise von einem Faserverbundwerkstoff umschlossenen Verstärkungselement.

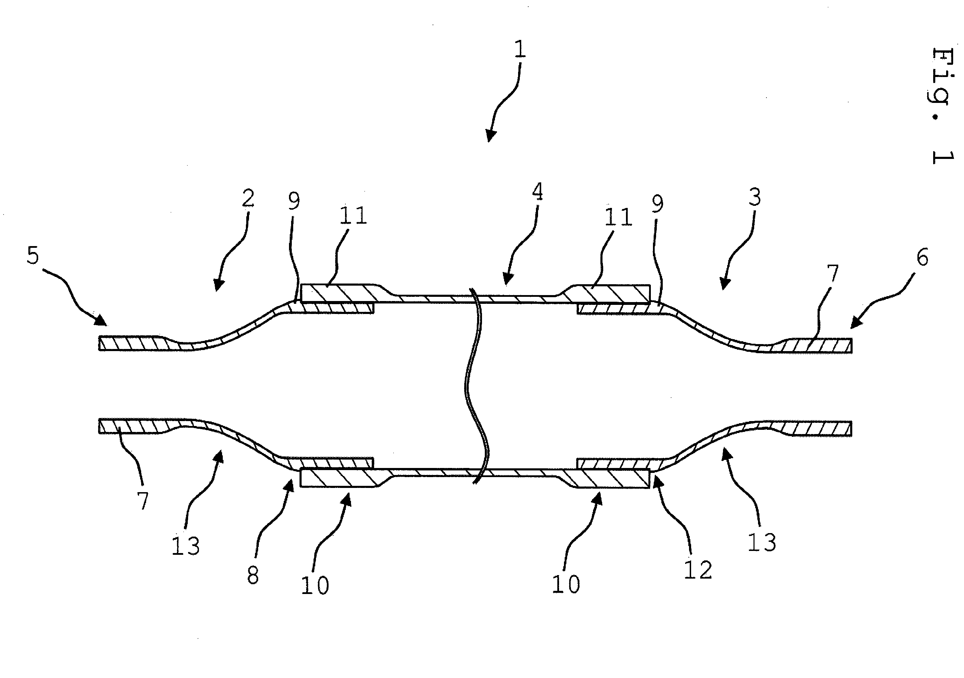

In Fig. 1 ist schematisch eine Wellenanordnung 1 bestehend aus einem ersten Übergangsmodul 2 und einem zweiten Übergangsmodul 3 sowie einer Hohlwelle 4 dargestellt. Das erste Übergangsmodul 2 und das zweite Übergangsmodul 3 weisen jeweils in einem ersten Verbindungsbereich 5 des ersten Übergangsmoduls 2 und in einem ersten Verbindungsbereich 6 des zweiten Übergangsmoduls 3 ein direkt an das erste Übergangsmodul 2 und das zweite Übergangsmodul 3 angewickeltes erstes Verstärkungselement 7 auf. Die in dem ersten Verbindungsbereich 5 und dem ersten Verbindungsbereich 6 direkt angewickelten ersten Verstärkungselemente 7 sind durch die in diesem Bereich erhöhte Laminatdicke gekennzeichnet. Das Übergangsmodul 2 weist in einem zweiten Verbindungsbereich 8 ein direkt angewickeltes zweites Verstärkungselement 9 auf. Das Übergangsmodul 2 ist in dem zweiten Verbindungsbereich 8 kraftschlüssig mit der Hohlwelle in einem ersten Hohlwellenverbindungsbereich 10 verbunden. Der Hohlwellenverbindungsbereich 10 weist ein direkt an die Hohlwelle angewickeltes Verbindungsteil 11 auf. Auf die gleiche Weise ist das zweite Übergangsmodul 3 in einem zweiten Verbindungsbereich 12 mit der Hohlwelle 4 verbunden. Das erste Übergangsmodul 2 und das zweite Übergangsmodul 3 weisen je einen Übergangsbereich 13 mit einer näherungsweise hyperbolischen Form auf.

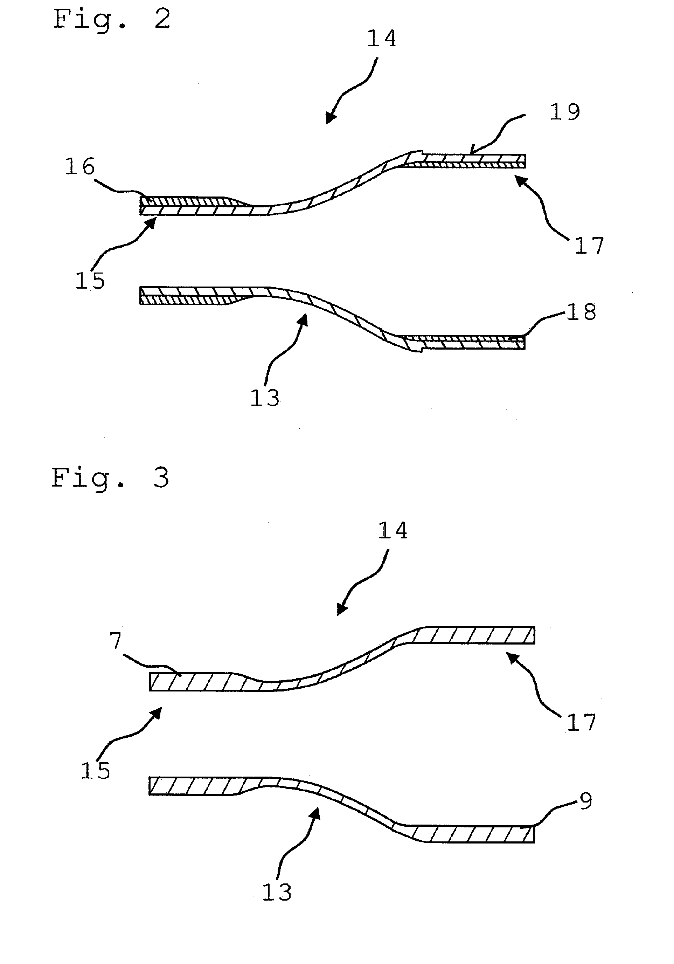

In Fig. 2 ist schematisch ein Übergangsmodul 14 dargestellt, das in einem ersten Verbindungsbereich 15 einen äußeren Stützring 16 als erstes Verstärkungselement aufweist. Der äußere Stützring 16 besteht aus Metall und ist beispielsweise durch Schrumpfen oder Pressen auf das Übergangsmodul 14 aufbringbar. Der äußere Stützring 16 kann aber auch aus einem Faserkunststoffverbundwerkstoff hergestellt sein. Das Übergangsmodul 14 weist in einem zweiten Verbindungsbereich 17 ein innen angeordnetes zweites Verstärkungselement 18 auf. Auch dieses Verstärkungselement 18 kann beispielsweise aus einem metallischen Werkstoff hergestellt sein. Des Weiteren weist der zweite Verbindungsbereich 17 eine bearbeitete Fügefläche 19 zur einfacheren Verbindung mit einer Hohlwelle auf. Das Übergangsmodul 14 weist in einem Übergangsbereich 13 eine näherungsweise hyperbolische Form auf.

In Fig. 3 ist schematisch ein Übergangsmodul 14 dargestellt, das in dem ersten Verbindungsbereich 15 ein direkt angewickeltes erstes Verstärkungselement 7 und in dem zweiten Verbindungsbereich 17 ein direkt angewickeltes zweites Verstärkungselement 9 aufweist. Der Übergangsbereich 13 des Übergangsmoduls 14 weist eine näherungsweise hyperbolische Form auf.

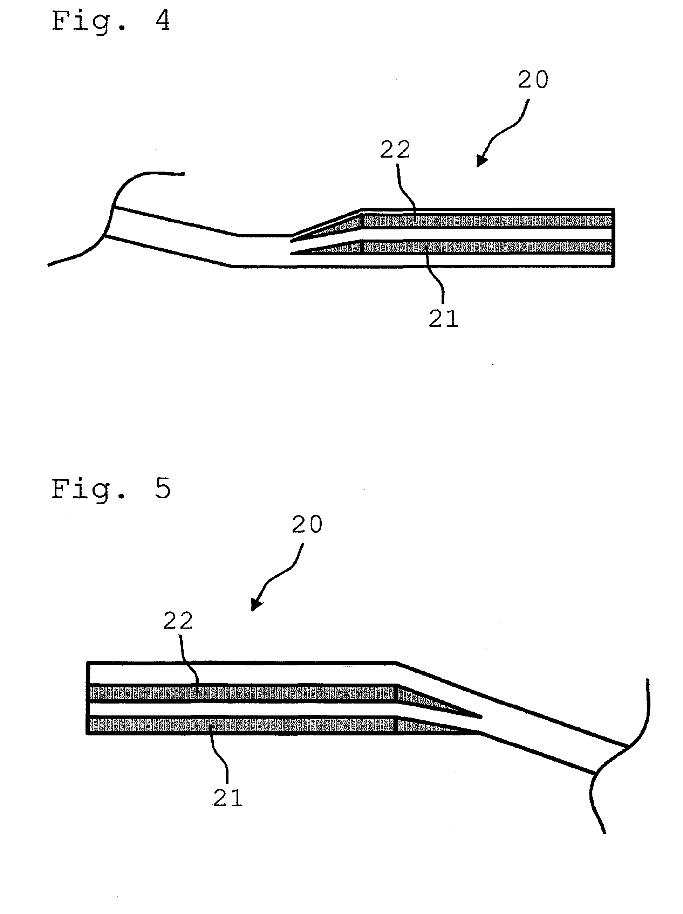

Fig. 4 zeigt schematisch einen Ausschnitt eines Übergangsmoduls mit einem Verbindungsbereich 20. Bei dem Verbindungsbereich 20 kann es sich um einen ersten Verbindungsbereich und/oder einen zweiten Verbindungsbereich handeln. In dem Verbindungsbereich 20 ist ein aus einem ersten Teil 21 und einem zweiten Teil 22 bestehendes mehrteiliges Verstärkungselement angeordnet. Das erste Teil 21 und das zweite Teil 22 sind vollständig von dem Faserverbundwerkstoff umschlossen.

In Fig. 5 ist schematisch ein Ausschnitt eines Übergangsmoduls mit dem Verbindungsbereich 20 dargestellt. Der Verbindungsbereich 20 weist ein zweiteiliges Verstärkungselement auf. Das erste Teil 21 ist auf einer Innenseite des Übergangsmoduls angeordnet. Das zweite Teil 22 ist vollständig innerhalb des Faserverbundwerkstoffs angeordnet. Ein auf diese Weise aufgebauter Verbindungsbereich 20 kann sowohl als erster Verbindungsbereich als auch als zweiter Verbindungsbereich eingesetzt werden.

## Patentansprüche

1. Wellenanordnung mit einer Hohlwelle aus einem Faserverbundwerkstoff, **dadurch gekennzeichnet, dass** die Hohlwelle (4) in einem Hohlwellenverbindungsbereich (10) mit einem Übergangsmodul (2, 3, 14) zur Einbindung der Hohlwelle in einen Antriebsstrang drehfest und biegesteif verbunden ist, wobei das Übergangsmodul (2, 3, 14) aus einem Faserverbundwerkstoff besteht und ein in einem ersten Verbindungsbereich (5, 6, 15) angeordnetes erstes Verstärkungselement (7, 16) und ein in einem zweiten Verbindungsbereich (8, 12, 17) angeordnetes zweites Verstärkungselement (9, 18) aufweist, wobei die Verstärkungselemente (7, 9, 16, 18) dazu geeignet sind, eine drehfeste Verbindung des Übergangsmoduls (2, 3, 14) mit der Hohlwelle und einem weiteren Element des Antriebsstrangs zu ermöglichen.

2. Wellenanordnung gemäß Anspruch 1, **dadurch gekennzeichnet, dass** ein Durchmesser des ersten Verbindungsbereichs (5, 6, 15) kleiner als ein Durchmesser des zweiten Verbindungsbereichs (8, 12, 17) ist.

3. Wellenanordnung gemäß einem der voranstehenden Ansprüche, **dadurch gekennzeichnet, dass** der erste Verbindungsbereich (5, 6, 15) und der zweite Verbindungsbereich (8, 12, 17) durch einen Übergangsbereich (13) verbunden sind, wobei sich der Übergangsbereich (13) ausgehend von dem ersten Verbindungsbereich (5, 6, 15) zu dem zweiten Verbindungbereich (8, 12, 17) erweitert.

4. Wellenanordnung gemäß Anspruch 3, **dadurch gekennzeichnet, dass** eine Durchmesseränderung des Übergangsbereichs (13) eine näherungsweise hyperbolische Krümmung aufweist.

5. Wellenanordnung gemäß einem der voranstehenden Ansprüche, **dadurch gekennzeichnet, dass** das zweite Verstärkungselement (9, 18) an einer Innenseite des zweiten Verbindungsbereichs (8, 12, 17) angeordnet ist.

6. Wellenanordnung gemäß einem der voranstehenden Ansprüche, **dadurch gekennzeichnet, dass** das erste Verstärkungselement (7, 16) an dem ersten Verbindungsbereich (5, 6, 15) und/oder das zweite Verstärkungselement (9, 18) an dem zweiten Verbindungsbereich (8, 12, 17) aufgepresst oder angewickelt ist.

7. Wellenanordnung gemäß einem der voranstehenden Ansprüche, **dadurch gekennzeichnet, dass** das erste Verstärkungselement (7, 16) und/oder das zweite Verstärkungselement (9, 18) ringförmig ausgestaltet sind.

8. Wellenanordnung gemäß einem der voranstehenden Ansprüche, **dadurch gekennzeichnet, dass** die Hohlwelle (4) in dem Hohlwellenverbindungsbereich (10) ein Verbindungsteil (11) aufweist.

9. Wellenanordnung gemäß einem der voranstehenden Ansprüche, **dadurch gekennzeichnet, dass** das Übergangsmodul (2, 3, 14) und die Hohlwelle (4) Fasern aufweisen, wobei die Fasern des Übergangsmoduls (2, 3, 14) anders ausgerichtet sind als die Fasern der Hohlwelle (4).

10. Wellenanordnung gemäß einem der voranstehenden Ansprüche, **dadurch gekennzeichnet, dass** das Übergangsmodul (2, 3, 14) und die Hohlwelle (4) eine unterschiedliche Laminatdicke aufweisen.

11. Wellenanordnung gemäß einem der voranstehenden Ansprüche, **dadurch gekennzeichnet, dass** das Übergangsmodul (2, 3, 14) aus einem anderen Faserverbundwerkstoff besteht als die Hohlwelle (4).

12. Wellenanordnung gemäß einem der voranstehenden Ansprüche, **dadurch gekennzeichnet, dass** die Hohlwelle (4) und das Übergangsmodul (2, 3, 14) kraftschlüssig miteinander verbindbar sind.

13. Wellanordnung gemäß einem der voranstehenden Ansprüche, **dadurch gekennzeichnet, dass** die Hohlwelle (4) längs eines Hohlwellenabschnitts unterschiedliche Durchmesser aufweist.

14. Wellenanordnung gemäß einem der voranstehenden Ansprüche, **dadurch gekennzeichnet, dass** zwei Übergangsmodule (2, 3, 14) gemäß einem der Ansprüche 1 bis 7 drehfest und biegesteif mit der Hohlwelle (4) verbunden sind, wobei jeweils ein Übergangsmodul (2, 3, 14) mit jeweils einem der beiden Enden der Hohlwelle (4) verbunden ist.

## Claims

1. Shaft assembly comprising a hollow shaft of a fibre composite material, **characterized in that** the hollow shaft (4) is connected in a rotationally fixed and flexurally rigid manner in a hollow-shaft connecting region (10) to a transitional module (2, 3, 14) for incorporating the hollow shaft in a drive train, the transitional module (2, 3, 14) consisting of a fibre composite material and having a first reinforcing element (7, 16) that is arranged in a first connecting region (5, 6, 15) and a second reinforcing element (9, 18) that is arranged in a second connecting region (8, 12, 17), the reinforcing elements (7, 9, 16, 18) being suitable for allowing a rotationally fixed connection of the transitional module (2, 3, 14) to the hollow shaft and to a further element of the drive train.

2. Shaft assembly according to Claim 1, **characterized in that** a diameter of the first connecting region (5, 6, 15) is less than a diameter of the second connecting region (8, 12, 17).

3. Shaft assembly according to one of the preceding claims, **characterized in that** the first connecting region (5, 6, 15) and the second connecting region (8, 12, 17) are connected by a transitional region (13), the transitional region (13) widening from the first connecting region (5, 6, 15) to the second connecting region (8, 12, 17).

4. Shaft assembly according to Claim 3, **characterized in that** a variation in the diameter of the transitional region (13) has an approximately hyperbolic curvature.

5. Shaft assembly according to one of the preceding claims, **characterized in that** the second reinforcing element (9, 18) is arranged on an inner side of the second connecting region (8, 12, 17).

6. Shaft assembly according to one of the preceding claims, **characterized in that** the first reinforcing element (7, 16) is pressed on or wound on the first connecting region (5, 6, 15) and/or the second reinforcing element (9, 18) is pressed on or wound on the second connecting region (8, 12, 17).

7. Shaft assembly according to one of the preceding claims, **characterized in that** the first reinforcing element (7, 16) and/or the second reinforcing element (9, 18) are of an annular design.

8. Shaft assembly according to one of the preceding claims, **characterized in that** the hollow shaft (4) has a connecting part (11) in the hollow-shaft connecting region (10).

9. Shaft assembly according to one of the preceding claims, **characterized in that** the transitional module (2, 3, 14) and the hollow shaft (4) have fibres, the fibres of the transitional module (2, 3, 14) being aligned differently than the fibres of the hollow shaft (4).

10. Shaft assembly according to one of the preceding claims, **characterized in that** the transitional module (2, 3, 14) and the hollow shaft (4) have a different laminate thickness.

11. Shaft assembly according to one of the preceding claims, **characterized in that** the transitional module (2, 3, 14) consists of a different fibre composite material than the hollow shaft (4).

12. Shaft assembly according to one of the preceding claims, **characterized in that** the hollow shaft (4) and the transitional module (2, 3, 14) can be connected non-positively to one another.

13. Shaft assembly according to one of the preceding claims, **characterized in that** the hollow shaft (4) has a diameter that differs along a portion of the hollow shaft.

14. Shaft assembly according to one of the preceding claims, **characterized in that** two transitional modules (2, 3, 14) according to one of Claims 1 to 7 are connected in a rotationally fixed and flexurally rigid manner to the hollow shaft (4), a transitional module (2, 3, 14) being respectively connected to each one of the two ends of the hollow shaft (4).

## Revendications

1. Agencement d'arbre comprenant un arbre creux en un matériau composite renforcé par des fibres, **caractérisé en ce que** l'arbre creux (4) est, dans une région de liaison d'arbre creux (10), relié, de manière solidaire en rotation et rigide à la flexion, à un module de transition (2, 3, 14) pour intégrer l'arbre creux dans une chaîne cinématique, le module de transition (2, 3, 14) étant constitué d'un matériau composite renforcé par des fibres et comprenant un premier élément de renforcement (7, 16) disposé dans une première région de liaison (5, 6, 15) et un deuxième élément de renforcement (9, 18) disposé dans une deuxième région de liaison (8, 12, 17), les éléments de renforcement (7, 9, 16, 18) étant appropriés pour permettre une liaison solidaire en rotation du module de transition (2, 3, 14) à l'arbre creux et à un élément supplémentaire de la chaîne cinématique.

2. Agencement d'arbre selon la revendication 1, **caractérisé en ce qu'**un diamètre de la première région de liaison (5, 6, 15) est inférieur à un diamètre de la deuxième région de liaison (8, 12, 17).

3. Agencement d'arbre selon l'une quelconque des revendications précédentes, **caractérisé en ce que** la première région de liaison (5, 6, 15) et la deuxième région de liaison (8, 12, 17) sont reliées par une région de transition (13), la région de transition (13) s'élargissant à partir de la première région de liaison (5, 6, 15) en direction de la deuxième région de liaison (8, 12, 17).

4. Agencement d'arbre selon la revendication 3, **caractérisé en ce qu'**une modification de diamètre de la région de transition (13) présente une courbure approximativement hyperbolique.

5. Agencement d'arbre selon l'une quelconque des revendications précédentes, **caractérisé en ce que** le deuxième élément de renforcement (9, 18) est disposé sur un côté intérieur de la deuxième région de liaison (8, 12, 17).

6. Agencement d'arbre selon l'une quelconque des revendications précédentes, **caractérisé en ce que** le premier élément de renforcement (7, 16) est pressé ou enroulé contre la première région de liaison (5, 6, 15) et/ou le deuxième élément de renforcement (9, 18) est pressé ou enroulé contre la deuxième région de liaison (8, 12, 17).

7. Agencement d'arbre selon l'une quelconque des revendications précédentes, **caractérisé en ce que** le premier élément de renforcement (7, 16) et/ou le deuxième élément de renforcement (9, 18) est/sont de configuration annulaire.

8. Agencement d'arbre selon l'une quelconque des revendications précédentes, **caractérisé en ce que** l'arbre creux (4) comprend une partie de liaison (11) dans la région de liaison d'arbre creux (10).

9. Agencement d'arbre selon l'une quelconque des revendications précédentes, **caractérisé en ce que** le module de transition (2, 3, 14) et l'arbre creux (4) comprennent des fibres, les fibres du module de transition (2, 3, 14) étant orientées différemment des fibres de l'arbre creux (4).

10. Agencement d'arbre selon l'une quelconque des revendications précédentes, **caractérisé en ce que** le module de transition (2, 3, 14) et l'arbre creux (4) présentent une épaisseur de stratifié différente.

11. Agencement d'arbre selon l'une quelconque des revendications précédentes, **caractérisé en ce que** le module de transition (2, 3, 14) est constitué d'un autre matériau composite renforcé par des fibres que celui de l'arbre creux (4).

12. Agencement d'arbre selon l'une quelconque des revendications précédentes, **caractérisé en ce que** l'arbre creux (4) et le module de transition (2, 3, 14) peuvent être reliés l'un à l'autre par force.

13. Agencement d'arbre selon l'une quelconque des revendications précédentes, **caractérisé en ce que** l'arbre creux (4) présente des diamètres différents le long d'une portion d'arbre creux.

14. Agencement d'arbre selon l'une quelconque des revendications précédentes, **caractérisé en ce que** deux modules de transition (2, 3, 14) selon l'une quelconque des revendications 1 à 7 sont reliés de manière solidaire en rotation et rigide à la flexion à l'arbre creux (4), un module de transition (2, 3, 14) respectif étant relié respectivement à l'une des deux extrémités de l'arbre creux (4).
